# EUROPEAN PATENT SPECIFICATION

(11) **EP 1 717 454 B1**
(45) Date of publication and mention of the grant of the patent: **17.12.2008**
(21) Application number: 05109409.2
(22) Date of filing: 11.10.2005
(51) Int. Cl.: F16B 7/04, F16L 23/032, F16L 23/00

(54) **Joint connecting clip and joint connecting structure**
Verbindungsclip und Verbindungsstruktur
Clip de raccordement et structure de raccordement

(30) Priority: 26.04.2005 JP 2005128697
(43) Date of publication of application: 02.11.2006
(73) Proprietor: Toflo Corporation, Hino-shi, Tokyo 191-0041 (JP)
(72) Inventor: Iida, Shuhei, Hino-shi, 191-0041, Tokyo (JP)
(74) Representative: Hengelhaupt, Jürgen

(56) References cited:
- EP-A- 0 332 507
- US-A- 4 776 721
- US-A- 5 048 876
- PATENT ABSTRACTS OF JAPAN vol. 2003, no. 05, 12 May 2003 (2003-05-12) & JP 2003 028368 A (OCHIAI:KK), 29 January 2003 (2003-01-29)

## Description

### BACKGROUND OF THE INVENTION

### Field of the Invention

The present invention relates to a joint connecting clip used when two joints are connected and a joint connecting structure using the same joint connecting clip.

### Description of the Related Art

Conventionally, as a joint connecting clip of this type, a joint connecting clip having a construction as disclosed, for example, in Japanese Patent Laid-Open No.2003-28368 has been known. A joint connecting clip (locking body) (1) described in the Document 1 has a construction such that one plate material having suitable elasticity is bent into a C shape to form the clip (1) (refer to Paragraph 0010 of the Document), and when a connecting pipe (5) is connected to a pipe to be connected (6), both lower skirt portions (34) at both ends of the C shape are opened toward both sides of right and left to mount the clip (1). Reference numerals in the parentheses are those used in Patent Document 1 . The same is true in the description below.

However, the joint connecting clip (1) having the above-described conventional construction is constructed so that both of the lower skirt portions (34) are opened toward both sides of right and left to mount the clip (1) to the connecting portion. Therefore, the clip removing access direction at the time when the already mounted joint connecting clip (1) is removed is the both sides of right and left or the rear of the joint connecting clip (1), so that when the joint connecting clip (1) is removed, both of the skirt portions (34) must be gripped and opened with both hands by inserting both hands, for example, from both sides of the joint connecting clip (1). Therefore, it is difficult to easily remove the joint connecting clip (1) with one hand.

In particular, in the case where there is no enough space for hands to be inserted on both sides of the joint connecting clip (1) , since the skirt portions (34) cannot be gripped with both hands, the joint connecting clip (1) cannot sometimes be removed even if both hands are used.

Also, for the joint connecting clip (1) having the above-described conventional construction, in order for the clip (1) to be removed, an enough space for hands to be inserted must always be secured on both sides of the joint connecting clip (1). Therefore, when it is attempted to use the joint connecting clip (1) having the above-described construction in an area in which a plurality of pipes are closely arranged in parallel as is often seen in a plant, for example, the joint connecting clips (1) must be arranged in a zigzag form as measures for securing an enough space for hands to be inserted on both sides of the joint connecting clip (1). This complicates the arrangement configuration of clip connecting clips. Also, even if the joint connecting clips (1) are arranged in a zigzag form, since the joint connecting clip (1) having the above-described construction always requires the aforementioned space on both sides, a plurality of pipes cannot be arranged closely in parallel, which poses a problem in that a compact pipe arrangement cannot be adopted.

Further, the joint connecting clip (1) having the above-described conventional construction has no locking mechanism. Therefore, there arises a problem in that the joint connecting clip (1) may be removed easily by a person unconcerned, or the joint connected by the joint connecting clip (1) may turn.

### SUMMARY OF THE INVENTION

The present invention has been made to solve the above problems, and accordingly an object thereof is to provide a joint connecting clip which can be removed easily with access from one direction only, thereby having excellent removing workability, is provided with rotation preventive means to prevent a joint from turning and also can be provided with a locking mechanism to prevent the clip from being removed easily, and is suitable for obtaining a compact piping configuration, and a joint connecting structure having the said joint connecting clip.

To achieve the above object, (1) the present invention provides a joint connecting structure comprising a joint connecting clip, wherein when a first joint having a flange portion on the outer peripheral surface providing a plurality of irregularities and a second joint having a flange portion on the outer peripheral surface providing a plurality of irregularities are connected to each other so that the flange portions are butted against each other, the joint connecting clip fixes the flange portions in a state in which the flange portions are butted against each other, and the joint connecting clip includes gripping portions which are closed so as to hold the flange portions therebetween from outer periphery both sides, an engagement portion with which the outer peripheral portions of the flange portions engage when the gripping portions are closed; and
a pair of opening/closing operation portions which are integrally provided above the gripping portions, and open the gripping portions with access of only one direction from the upside of the gripping portions by a pinching operation, wherein the joint connecting clip further comprises urging means for always urging the gripping portions in the closing direction, and wherein the engagement portion has two opening holes divided vertically by a bar, and has a construction such that at least any one of convex portions of the irregularities engages with one opening hole; an upper convex portion adj acent to the engaging convex portion engages with the other opening hole; and the bar engages with the concave portion between the upper and lower convex portions engaging with the opening holes, by which the turning of the first and second joints is prevented.
(2) In a preferred embodiment, the joint connecting structure further comprises the first joint having a flange portion on the outer peripheral surface providing a plurality of irregularities and the second joint having a flange portion on the outer peripheral surface providing a plurality of irregularities.
(3) The present invention also provides a joint connecting structure comprising a joint connecting clip, wherein when a first joint having a flange portion on the outer peripheral surface and a second joint having a flange portion on the outer peripheral surface are connected to each other so that the flange portions are butted against each other, the joint connecting clip fixes the flange portions in a state in which the flange portions are butted against each other, and wherein the joint connecting clip is formed by bending a plate spring material, and includes gripping portions which are closed so as to hold the flange portions therebetween from outer periphery both sides by elastic deformation of the plate spring material, an engagement portion with which the outer peripheral portions of the flange portions engage when the gripping portions are closed, and a pair of opening/closing operation elements, wherein the joint connecting clip further comprises a pair of mounting holes provided above the gripping portions, and wherein the pair of opening/closing operation elements are insertedly mounted in the paired mounting holes detachably, and open the gripping portions with access of only one direction from the upside of the gripping portions by a pinching operation.

In a preferred embodiment, the joint connecting structure further comprises the first joint having a flange portion on the outer peripheral surface and the second joint having a flange portion on the outer peripheral surface, wherein a plurality of irregularities are formed on the outer peripheral surfaces of the flange portions.

In the joint connecting structure in accordance with one of the above mentionedpresent inventions, the joint connecting clip may further include opening operation prohibiting means for prohibiting work for opening the gripping portions.

Preferably, the opening operation prohibiting means may have a set of engagement holes which are provided in the upper end portions of the opening/closing operation portions so as to face to each other; and an insertion part inserted between the upper end portions of the opening/closing operation portions, and the insertion part may include a plate portion; a fixed protrusion formed so as to project from one end portion of the plate portion; a sliding protrusion provided so as to appear and disappear from the other end portion of the plate portion; and urging means for urging the sliding protrusion in a direction such that the sliding protrusion is projected to the outside from the other end portion of the plate portion, and may be constructed so that when work for opening the gripping portions is prohibited, the sliding protrusion and the fixed protrusion are inserted into the set of engagement holes, whereby the appearance and disappearance of the sliding protrusion are prohibited in this state.

Preferably, the opening operation prohibiting means may have a set of locking convex portions which are provided in the upper end portions of the opening/closing operation portions and face to each other; and an insertion part inserted between the upper end portions of the opening/closing operation portions, and the insertion part may have a construction such that both ends of a plate spring material are bent in the same direction, and both bent portions are provided with locking concave portions which are concaved so as to match the shapes of the locking convex portions, and when work for opening the gripping portions is prohibited, the locking concave portions are fitted on the locking convex portions by deflecting deformation of the bent portions.
Preferably, a plurality of irregularities may be formed on the outer peripheral surfaces of the flange portions, and the engagement portion may have two opening holes divided vertically by a bar, and may have a construction such that of the irregularities, at least any one of convex portions engages with one opening hole; an upper convex portion adjacent to the engaging convex portion engages with the other opening hole; and the bar engages with the concave portion between the upper and lower convex portions engaging with the opening holes, by which the turning of the first and second joints is prevented.
Preferably, there may be provided a lock screw for fixedly locking the joint connecting clip to the joint side.

In the present invention, there is adopted a configuration in which the paired opening/closing operation portions are provided above the gripping portions, and the gripping portions are opened with access of only one direction by an operation of pinching the opening/closing operation portions from upper both sides of the gripping portions, or a configuration in which the paired mounting holes are provided above the gripping portions, paired opening/closing operation elements are insertedly mounted detachably in the mounting holes, and the gripping portions are opened with access of only one direction by an operation of pinching the paired opening/closing operation elements, which are insertedly mounted in the mounting holes, from upper both sides of the gripping portions. Therefore, the joint connecting clip can be removed easily with one hand only with access of one direction such that the paired opening/closing operation elements are pinched from the upside of the gripping portions.

Also, in the present invention, when it is attempted to remove the joint connecting clip, since the gripping portions are opened by a one-hand operation performed from the upside of the gripping portions, unlike the joint connecting clip having the conventional construction, there is no need for securing a space, which is necessary for removing the joint connecting clip, on both sides of the joint connecting clip. Since such a space can be omitted, a plurality of joint connecting clips can be arranged closely in the transverse direction in a row, so that the arrangement configuration of joint connecting clips can be simplified. Therefore, the joint connecting clip in accordance with the present invention is suitable for obtaining a compact piping configuration.

### BRIEF DESCRIPTION OF THE DRAWINGS

FIG. 1 is an explanatory view of a male joint (first joint) , FIG. 1(A) being a front view of the male joint, FIG. 1(B) being a right side view thereof, and FIG. 1(C) being a sectional view taken along the line c-c of FIG. 1(A);
FIG. 2 is an explanatory view of a female joint (second joint) mating with the male joint shown in FIG. 1, FIG. 2(A) being a front view of the female joint, FIG. 2(B) being a right side view thereof, and FIG. 2(C) being a sectional view taken along the line c-c of FIG. 2(A);
FIG. 3 is an explanatory view showing a state in which the male joint shown in FIG. 1 and the female joint shown in FIG. 2 are connected to each other, FIG. 3(A) being an appearance view of the connected male joint and female joint, and FIG. 3(B) being a sectional view taken along the line b-b of FIG. 3(A);
FIG. 4 is an explanatory view of a joint connecting clip in accordance with one embodiment of the present invention, FIG. 4(A) being a front view of the joint connecting clip, FIG. 4(B) being a top view thereof, and FIG. 4(C) being a right side view thereof;
FIG. 5 is an explanatory view of opening operation prohibiting means which prohibits work for opening gripping portions of the joint connecting clip shown in FIG. 4, FIG. 5(A) being a sectional view of the joint connecting clip and the opening operation prohibiting meansmounted thereto,which is viewed from the front, FIG. 5(B) being a top view thereof, and FIG. 5(C) being a right side view thereof;
FIG. 6 is an explanatory view showing a state in which the joint connecting clip shown in FIG. 4 is used and a state in which the opening operation prohibiting means shown in FIG. 5 is used;
FIG. 7 is an explanatory view of a joint connecting clip in accordance with another embodiment of the present invention, FIG. 7(A) being a front view of the joint connecting clip, FIG. 7(B) being a top view thereof, and FIG. 7(C) being a right side view thereof;
FIG. 8 is an explanatory view of opening operation prohibiting means which prohibits work for opening gripping portions of the joint connecting clip shown in FIG. 7, FIG. 8(A) being a front view of the joint connecting clip and the opening operation prohibiting means mounted thereto, FIG. 8(B) being a top view thereof, and FIG. 8(C) being a right side view thereof;
FIG. 9 is an explanatory view showing a state in which the joint connecting clip shown in FIG. 7 is used and a state in which the opening operation prohibiting means shown in FIG. 8 is used;
FIG. 10 is an explanatory view of a joint connecting clip in accordance with still another embodiment of the present invention, FIG. 10(A) being a sectional view of the joint connecting clip, which is viewed from the front, FIG. 10(B) being a top view thereof, and FIG. 10(C) being a right side view thereof;
FIG. 11 is an explanatory view of opening operation prohibiting means which prohibits work for opening gripping portions of the joint connecting clip shown in FIG. 10;
FIG. 12 is an explanatory view showing a state in which the joint connecting clip shown in FIG. 10 is used and a state in which the opening operation prohibiting means shown in FIG. 11 is used;
FIG. 13 is an explanatory view of a joint connecting clip in accordance with still another embodiment of the present invention, FIG. 13(A) being a sectional view of the joint connecting clip, which is viewed from the front, FIG. 13(B) being a top view thereof, and FIG. 13(C) being a right side view thereof; and
FIG. 14 is an explanatory view showing a state in which the joint connecting clip shown in FIG. 13 is used.

### DETAILED DESCRIPTION OF THE PREFERRED EMBODIMENTS

Preferred embodiments of the present invention will now be described in detail with reference to the accompanying drawings.

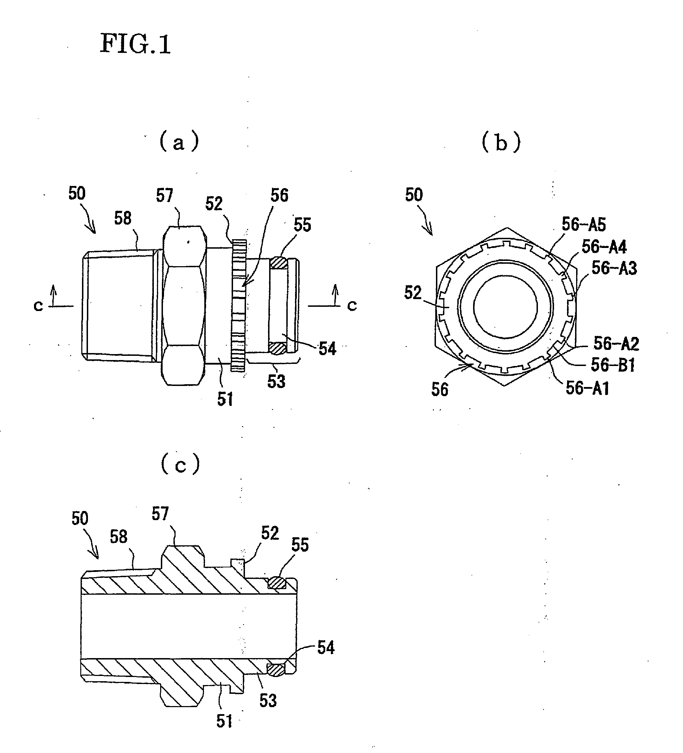

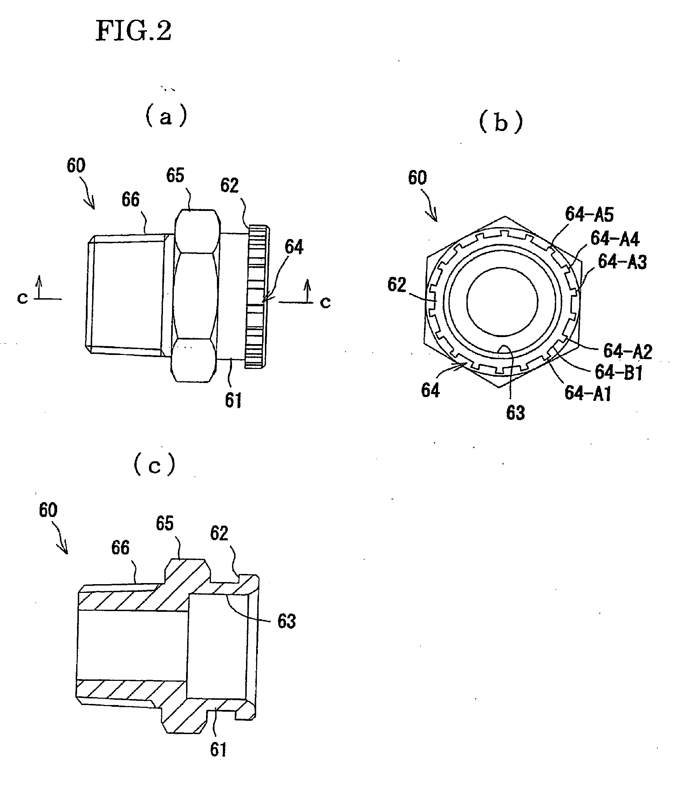

FIG. 1 is an explanatory view of a male joint (first joint). A male joint 50 shown in FIG. 1 has a construction such that a flange portion 52 is integrally formed on the outer peripheral surface of a cylindrical body 51. The flange portion 52 is formed at a position slightly retracting from the tip end (one end) of the body 51. Also, a tip end portion of the body 51 in front of the flange portion 52 is formed as an insertion portion 53 that is inserted into a female joint 60 shown in FIG. 2, and on the outer peripheral surface of the insertion portion 53, an O-ring mounting groove 54 and an O-ring 55 mounted in the groove 54 are provided. Further, on the outer peripheral surface of the flange portion 52, irregularities 56 are formed at fixed intervals.

FIG. 2 is an explanatory view of a female joint (second joint) mating with the male joint shown in FIG. 1. A female joint 60 shown in FIG. 2 has a construction such that a flange portion 62 is integrally formed on the outer peripheral surface of a cylindrical body 61. In the female joint 60 shown in FIG. 2, the flange portion 62 has the same diameter as that of the flange portion 52 of the male joint 50, and is formed at the tip end (one end) of the body 61. An inside space on the tip end portion side of the body 61 forms an insertion hole 63 into which the insertion portion 53 of the male joint 50 is inserted. On the outer peripheral surface of the flange portion 62 of the female joint 60 as well, irregularities 64 similar to those on the flange portion 52 are formed at the same fixed intervals as those of the irregularities 56 of the male joint 50.

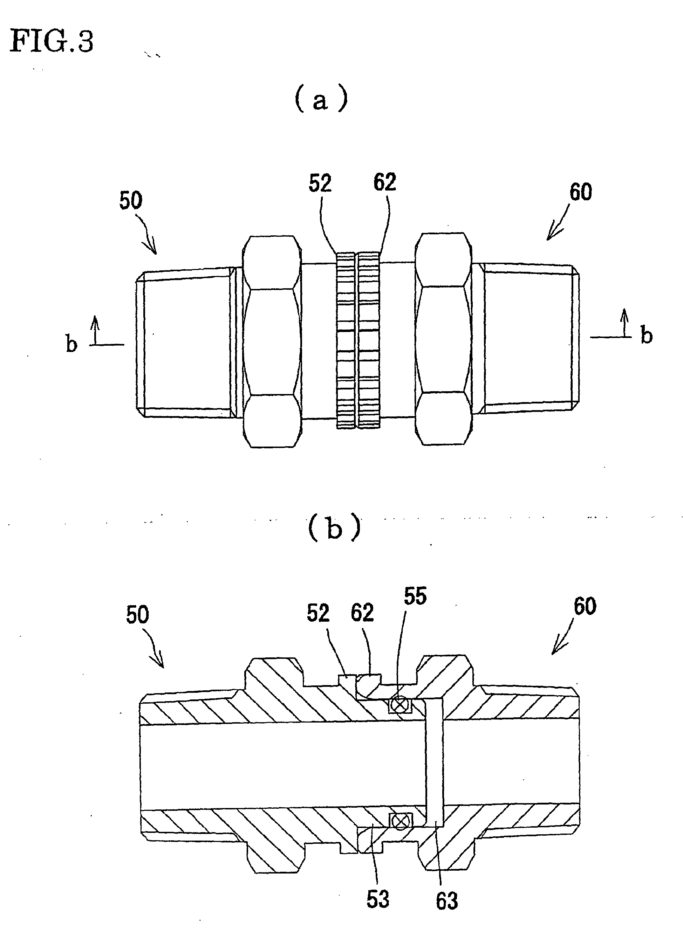

When the insertion portion 53 of the male joint 50 is inserted into the insertion hole 63 of the female joint 60, as shown in FIG. 3, the male joint 50 and the female joint 60 are connected to each other in a state in which the flange portions 52 and 62 are butted against each other.

In this embodiment, it is assumed that the male joint 50 and the female joint 60 are directly attached to equipment that handles a fluid, such as a flow control valve, or a hose (pipe). In order to install the male joint 50 to the equipment, an externally threaded portion 58 formed on the rear end outer peripheral surface of the body 51 or a connecting portion such as a flange is connected to a connecting portion of the equipment or the hose (pipe) . This work is performed by gripping a nut 57 provided integrally on the body middle portion outer peripheral surface of the body 51. Also, in order to install the female joint 60 to the equipment, an externally threaded portion 66 formed on the rear end outer peripheral surface of the body 61 is screwed in the joint connecting portion of the equipment. This work is performed by gripping a nut 65 provided integrally on the body middle portion outer peripheral surface of the body 61.

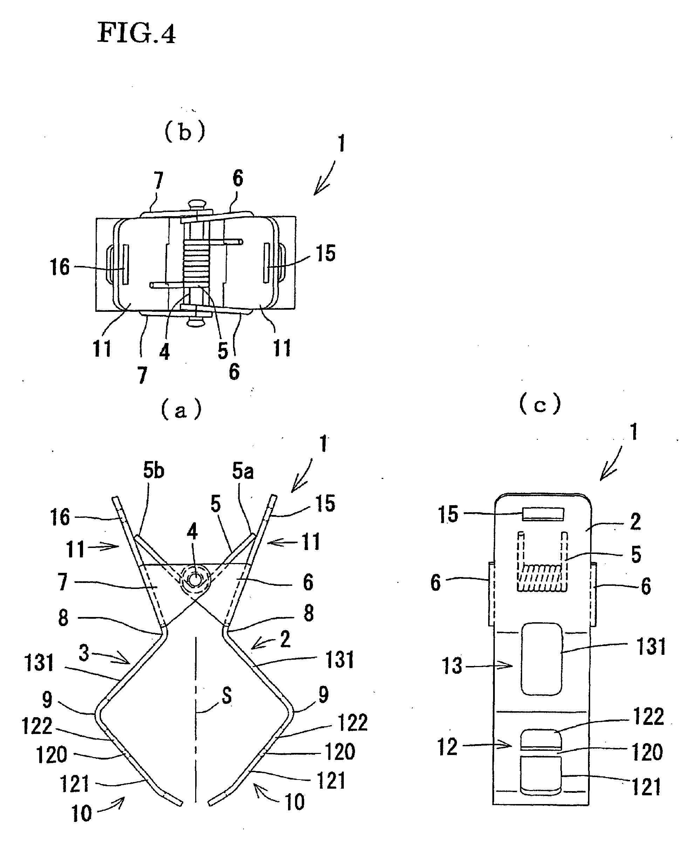

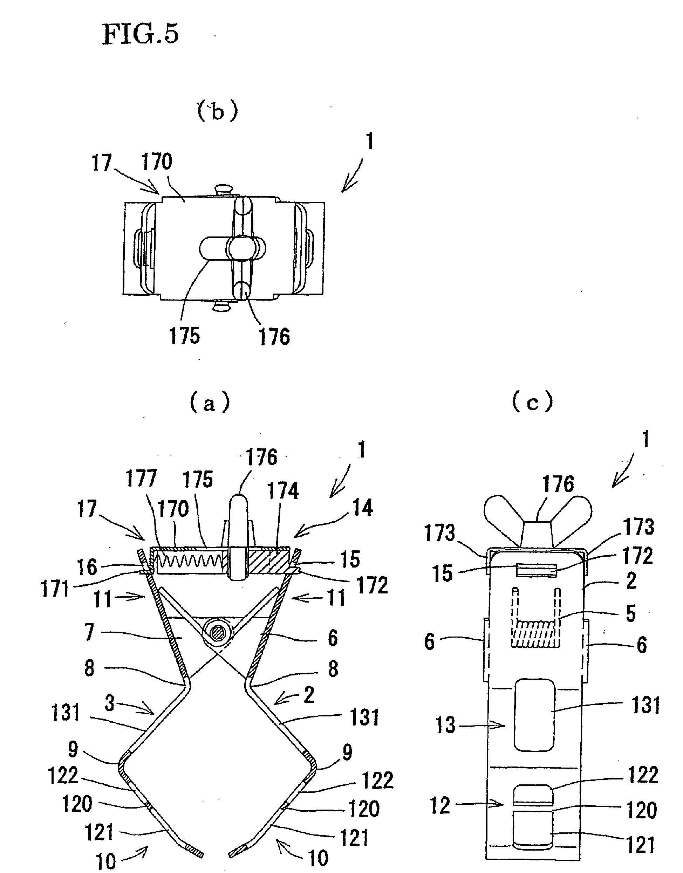

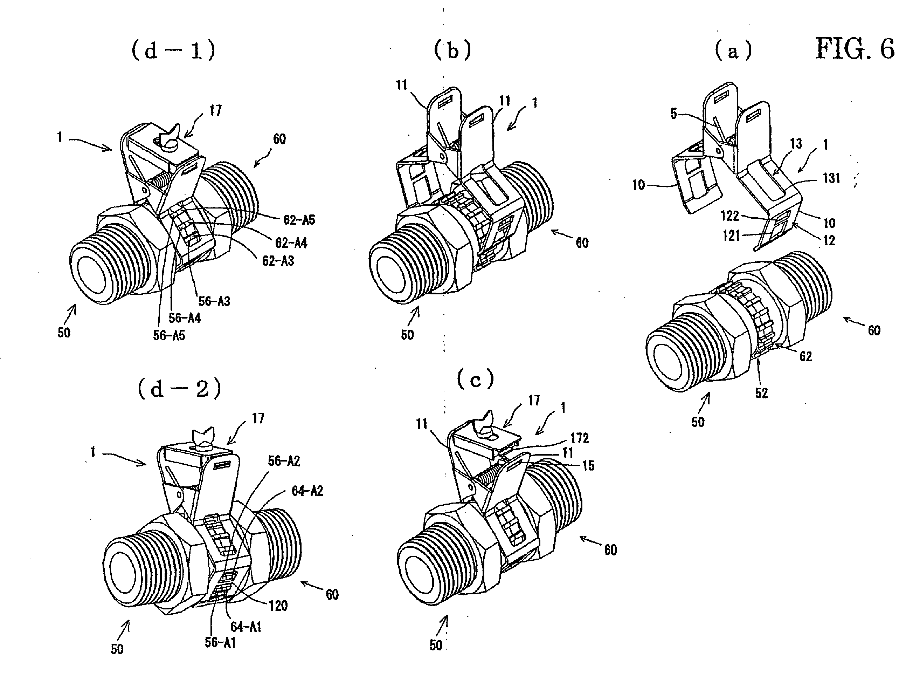

FIG. 4 is an explanatory view of a joint connecting clip in accordance with one embodiment of the present invention, FIG. 5 is an explanatory view of opening operation prohibiting means which prohibits work for opening gripping portions of the joint connecting clip shown in FIG. 4, and FIG. 6 is an explanatory view showing a state in which the joint connecting clip shown in FIG. 4 is used and a state in which the opening operation prohibiting means shown in FIG. 5 is used.

A joint connecting clip 1 shown in FIG. 4 is used as a means for preventing the male joint 50 and the female joint 60 from coming off by fixing the male joint 50 and the female joint 60 connected as shown in FIG. 3 to each other in a state in which the flange portions 52 and 62 are butted against each other (refer to FIG. 6).

The joint connecting clip 1 shown in FIG. 4 is made up of two metal plate parts 2 and 3, a pin shaft 4, and a spring 5. The two metal plate parts 2 and 3 face to each other via the pin shaft 4, and are arranged so as to be at right angles to the pin shaft 4.

Also, the metal plate parts 2 and 3 are provided so as to be turnable around the pin shaft 4. As a turnable configuration of the metal plate parts 2 and 3, in this embodiment, bent elements 6 and 7, which are bent substantially at right angles and projected toward the pin shaft, are provided at both side edges of the metal plate parts 2 and 3, the bent element 6 of one metal plate part 2 and the bent element 7 of the other metal plate part 3 are overlapped, and the pin shaft 4 penetrates the overlapping portion.

Further, each of the metal plate parts 2 and 3 is formed with a valley bent portion 8 and a peak bent portion 9 viewed from the centerline S of the joint connecting clip 1. The valley bent portion 8 is provided below the bent element 6, 7 of the metal plate part 2, 3, and on the other hand, the peak bent portion 9 is provided below the valley bent portion 8.

In this embodiment, of the whole of the metal plate parts 2 and 3, peripheral portions on both sides of the peak bent portions 9 serve as a portion for closing so as to hold the flange portions 52 and 62 of the male joint 50 and the female joint 60 therebetween from the outer periphery both sides as gripping portions 10 of the joint connecting clip 1. Also, of the whole of the metal plate parts 2 and 3, portions above the valley bent portions 8, namely, portions that are open into a V shape with respect to the centerline S of the joint connecting clip 1 serves as a portion operated so as to be pinched from upper both sides of the gripping portion 10 as a pair of opening/closing operation portions 11 of the joint connecting clip 1.

The aforementioned gripping portions 10 of the joint connecting clip 1 are always urged in the closing direction by the force of the spring 5.

Specifically, the spring 5 is mounted on the pin shaft 4. One end (right end) 5a of the spring 5 is configured so as to press an upper portion of the metal plate part 2 on the right-hand side in the figure from the inside to the outside, and the other end (left end) 5b of the spring 5 is configured so as to press an upper portion of the metal plate part 3 on the left-hand side in the figure from the inside to the outside.

By the action of force of the spring 5, a clockwise turning force around the pin shaft 4 is given to the upper side of the right-hand side metal plate part 2, namely, one opening/closing operation portion 11, and a counterclockwise turning force around the pin shaft 4 is given to the upper side of the left-hand side metal plate part 3, namely, the other opening/closing operation portion 11. Therefore, the two metal plate parts 2 and 3 are in a state of being closed so that the lower sides thereof collide opposedly. This state is a closing state of the gripping portions 10 of the joint connecting clip 1. For convenience of explanation, a state in which the gripping portions 10 are slightly open is shown in FIGS. 4, 5, 7 and 8.

When the paired opening/closing operation portions 11 are operated so as to be pinched with a force greater than the urging force of the spring 5, the right-hand side metal plate part 2 turns counterclockwise around the pin shaft 4, and at the same time, the left-hand side metal plate part 3 turns clockwise around the pin shaft 4, by which the gripping portion 10 having been closed by the urging force of the spring 5 is opened.

The gripping portion 10 of the joint connecting clip 1 constructed as described above is provided with a first engagement portion 12 and a second engagement portion 13 as portions with which the outer peripheral portions of flange portions of the male joint 50 and the female joint 60 engage.

The first and second engagement portions 12 and 13 are configured so as to be arranged vertically along the outer peripheries of the flange portions 52 and 62 of the male and female joints 50 and 60. Also, of the engagement portions 12 and 13, the lower first engagement portion 12 is formed by two opening holes 121 and 122 divided vertically by a bar 120.

This embodiment employs a construction such that of the irregularities 56 and 64 on the outer peripheral surfaces of the flange portions 52 and 62 of the male and female joints 50 and 60, at least any one of convex portions 56-A1 engages with one (lower) opening hole 121, an upper convex portion 56-A2 adjacent to the engaging convex portion 56-A1 engages with the other (upper) opening hole 122, and further the bar 120 engages with the concave portion 56-B1, 64-B1 between the upper and lower convex portions 56-A2 and 56-A1 engaging with the opening holes 121 and 122, by which the turning of the male and female joints 50 and 60 is prevented (refer to FIG. 6(D-2)). On the other hand, the upper second engagement portion 13 consists of one opening hole 131 so that other several number of convex portions 56-A3, 56-A4 and 56-A5 engage with the opening hole 131 (refer to FIG. 6(D-1)).

The joint connecting clip 1 shown in FIG. 4 is provided with opening operation prohibiting means 14 for prohibiting/locking an operation for opening the gripping portions 10. The opening operation prohibiting means 14 is made up of a set of engagement holes 15 and 16 and an insertion part (slide lock part) 17. The set of the engagement holes 15 and 16 are formed in upper end portions of the opening/closing operation portions 11 of the joint connecting clip 1, namely, in upper end portions of the metal plate parts 2 and 3, respectively, so as to face to each other. The insertion part 17 is inserted between the upper end portions of the opening/closing operation portions 11 of the joint connecting clip 1, namely, between the upper end portions of the metal plate parts 2 and 3. The insertion part 17 is specifically configured as described below.

The insertion part 17 has a metallic plate portion 170. In one end portion of the plate portion 170, a fixed protrusion 171 is projectingly formed, and in the other end portion of the plate portion 170, a sliding protrusion 172 is provided. The fixed protrusion 171 has a construction formed by bending one end portion of the plate portion 170, and is integrally fixed to the plate portion 170. On the other hand, the sliding protrusion 172 is provided so as to appear and disappear from the other end portion of the plate portion 170.

As a specific configuration for providing the sliding protrusion 172 so as to appear and disappear as described above, a configuration was adopted in which slide guide plates 173 are provided at both side edges of the plate portion 170, a slider 174 is arranged between the slide guide plates 173, and the sliding protrusion 172 is integrally formed in the tip end portion in the slide direction of the slider 174.

In this configuration, the slider 174 is supported on the plate portion 170 side by a screw 17 6 inserted in an elongated hole 175 provided in the plate portion 170. When the screw 176 is tightened, the slider 174 comes into close contact with the plate portion 170, by which the slider 174 is made incapable of sliding. When the screw 176 is loosened, the contacting state of the slider 174 and the plate portion 170 is released, so that the slider 174 becomes slidable while being guided by the slide guide plates 173 with a stroke corresponding to the length of the elongated hole 175. Also, the slider 174 is always urged by a spring 177 in the direction such that the sliding protrusion 172 is projected to the outside.

In order to prohibit work for opening the gripping portions 10 of the joint connecting clip 1 by using the insertion part (slide lock part) 17 having the above-described construction, the screw 176 is loosened to make the slider 174 capable of sliding, and thereby the sliding protrusion 172 is retracted (refer to FIG. 6(C)). In this state, the whole of the insertion part 17 is inserted between the upper end portions of the opening/closing operation portions 11 of the joint connecting clip 1. At this time, the fixed protrusion 171 is inserted in one engagement hole 16, and the sliding protrusion 172 is arranged so as to face to the other engagement hole 15. Then, the sliding protrusion 172 is projected by the force of the spring 177. The projecting sliding protrusion 172 engages with the other engagement hole 15, and in this state, the screw 176 is tightened. Thus, the slider 174 becomes incapable of sliding, and hence the appearance and disappearance of the sliding protrusion 172 is prohibited. After the work for setting the insertion part 17 has been finished in this manner, the whole of the insertion part 17 becomes an obstacle to an operation for pinching the opening/closing operation portions 11 of the joint connecting clip 1. Therefore, that operation cannot be performed, so that the operation for opening the gripping portions 10 of the joint connecting clip 1 is prohibited.

A usage example of the joint connecting clip 1 constructed as described above, which is shown in FIG. 4, will be explained with reference to FIG. 6.

A work procedure for fixing the male joint 50 and the female joint 60 to each other by using the joint connecting clip 1 shown in FIG. 4 is as described below. First, the male joint 50 and the female joint 60 are connected to each other as shown in FIG. 6(A). On the other hand, the paired opening/closing operation portions 11 are pinched with one hand from the upside of the gripping portions 10 of the joint connecting clip 1 shown in FIG. 4 so that the opening/closing operation portions 11 are brought close to each other, by which the gripping portions 10 are opened as shown in FIG. 6(A) with access of only one direction from the upside of the gripping portions 10. In this state, as shown in FIG. 6(B), the open gripping portions 10 are set so as to cover the outer peripheral portions of the flange portions 52 and 62 of the male and female joints 50 and 60, and the hand that pinches the opening/closing operation portions 11 is let go.

Thereby, the gripping portions 10 are closed by the force of the spring 5, so that the outer peripheral portions of the flange portions 52 and 62 engage with the engagement portions 12 and 13 of the gripping portions 10. This engaging mode is a mode in which as shown in FIGS. 6(C), 6(D-1) and 6(D-2), the convex portions 56-A1 and 64-A1 on the outer peripheral surfaces of the flanges 52 and 62 engage with the opening hole 121, the upper convex portions 56-A2 and 64-A2 adjacent to the engaging convex portions 56-A1 and 64-A1 engage with the opening hole 122, and further the bar 120 engages with the concave portions 56-B1 and 64-B1 between the upper and lower convex portions 56-A2 and 56-A1 and 64-A2 and 64-A1 engaging with the opening holes 121 and 122, and a mode in which the plurality of convex portions 56-A3, 56-A4, 56-A5, 64-A3, 64-A4 and 64-A5 engage with the opening hole 131. Also, the engaging mode is a loosely engaging mode in which a gap is provided in the vertical direction of the convex portions 56-A1, 64-A1, 56-A2 and 64-A2. The reason for this is as follows: for example, the convex portion 56-A1 of the male joint 50 and the convex portion 64-A1 of the female joint 60 do not sometimes align with each other in a straight line depending on the installation state of the male joint 50 and the female joint 60 to the equipment, and even if such a shift occurs, both of the convex portions 56-A1 and 64-A1 are made capable of engaging with one opening hole 121.

By the above-described procedure, the fixing of the male joint 50 and the female joint 60 using the joint connecting clip 1 is competed. In order to remove the joint connecting clip 1 that fixes the male joint 50 and the female joint 60 to each other, the paired opening/closing operation portions 11 have only to be pinched with one hand from upper both sides of the gripping portions 10 of the joint connecting clip 1 so that the opening/closing operation portions 11 are brought close to each other. By doing this, the gripping portions 10 are opened with access of only one direction from the upside of the gripping portions 10. Thereby, the engagement portions 12 and 13 are removed from the flange portions 52 and 62, so that the joint connecting clip 1 can be removed easily.

In the case where it is desired to prohibit the operation for opening the gripping portions 10 of the joint connecting clip 1 that fixes the male joint 50 and the female joint 60 to each other as described above, work for setting the insertion part 17 on the opening/closing operation portion 11 side of the joint connecting clip 1 is performed. This setting work is performed in accordance with the following steps:

### <Step 1>

First, as shown in FIG. 6(C), the sliding protrusion 172 is retracted, and in this state, the whole of the insertion part 17 is inserted between the upper end portions of the opening/closing operation portions 11 of the joint connecting clip 1. In order to retract the sliding protrusion 172, the screw 176 has only to be loosened to slide the slider 174. When the insertion part 17 is inserted, the fixed protrusion 171 of the insertion part 17 is inserted into one engagement hole 16, and the sliding protrusion 172 is arranged so as to face to the other engagement hole 15. As shown in FIGS. 6(D-1) and 6(D-2), the projecting sliding protrusion 172 is allowed to engage with the other engagement hole 15 by the force of the spring 177.

### <Step 2>

Next, the screw 176 is tightened not to allow the slider 174 to slide and hence to prohibit the appearance and disappearance of the sliding protrusion 172. Thereby, the fixed protrusion 171 and the sliding protrusion 172 are engaged with the engagement holes 15 and 16, respectively, so that the insertion part 17 is prevented from coming off between the upper end portions of the opening/closing operation portions 11. Also, the insertion part 17 disables the operation for pinching the opening/closing operation portions 11, so that the operation for opening the gripping portions 10 of the joint connecting clip 1 by the pinching operation is prohibited. By performing the above steps, the work for setting the insertion part 17 is completed.

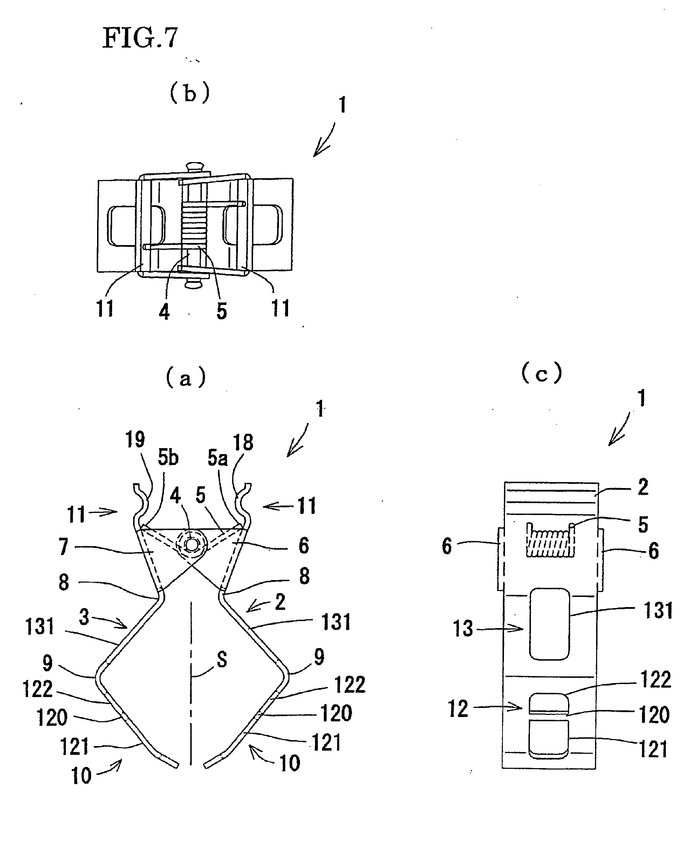

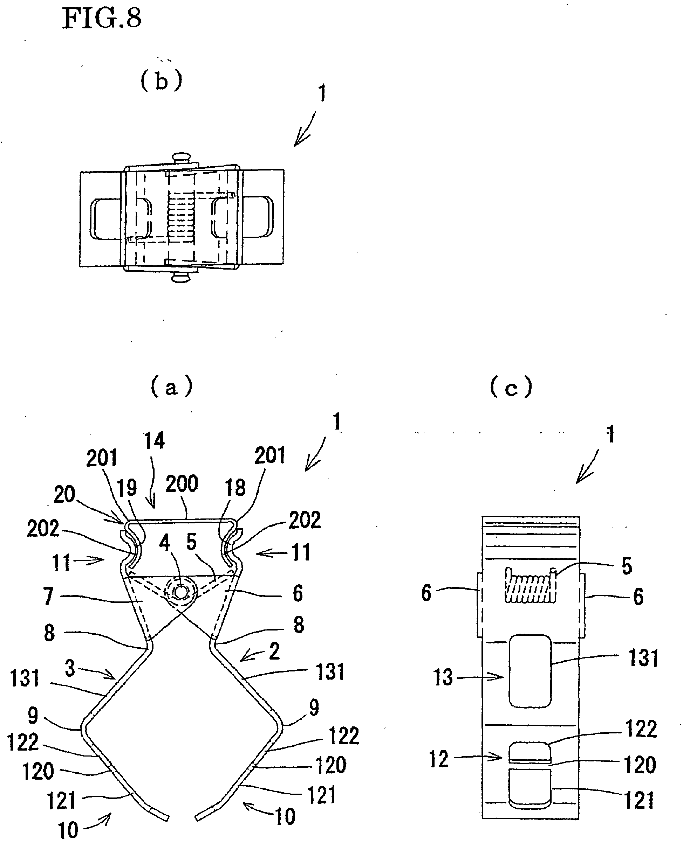

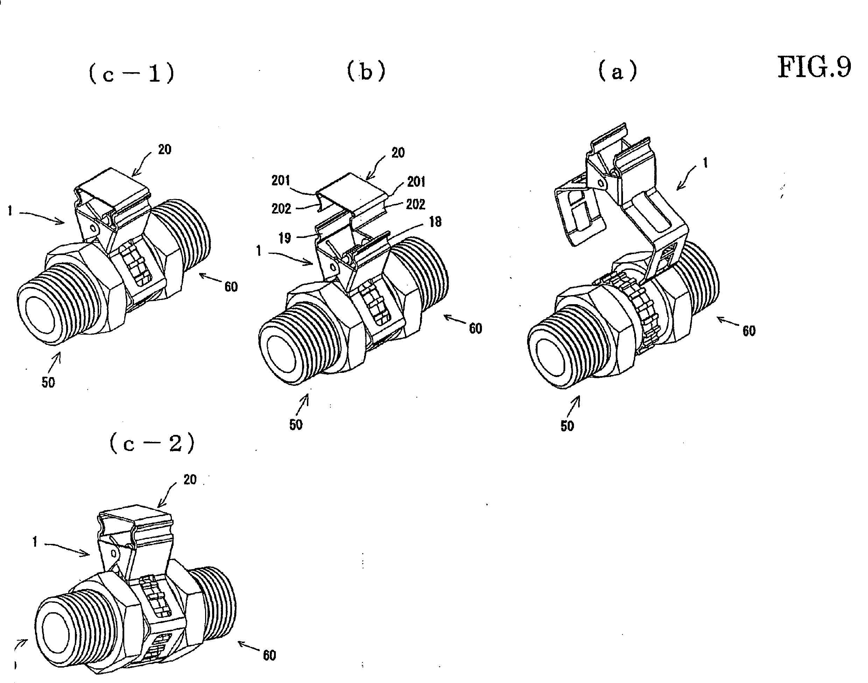

FIG. 7 is an explanatory view of a joint connecting clip in accordance with another embodiment of the present invention, FIG. 8 is an explanatory view of opening operation prohibiting means which prohibits work for opening gripping portions of the joint connecting clip shown in FIG. 7, and FIG. 9 is an explanatory view showing a state in which the joint connecting clip shown in FIG. 7 is used and a state in which the opening operation prohibiting means shown in FIG. 8 is used.

The basic construction of the joint connecting clip shown in FIG. 7 is the same as that of the joint connecting clip shown in FIG. 4. Therefore, the same reference numerals are applied to elements that are the same as those in FIG. 4, and the detailed explanation thereof is omitted. The joint connecting clip shown in FIG. 7 has opening operation prohibiting means 14 of a construction different from that for the joint connecting clip shown in FIG. 4.

Specifically, the opening operation prohibiting means 14 for the joint connecting clip shown in FIG. 7 is made up of a set of locking convex portions 18 and 19 and an insertion part (one-touch lock part) 20 of a construction different from that shown in FIG. 5. Like the set of engagement holes 15 and 16 shown in FIG. 5, the set of locking convex portions 18 and 19 are provided in the upper end portions of the opening/closing operation portions 11 of the joint connecting clip 1, namely, in the upper end portions of the metal plate parts 2 and 3 so as to face to each other. The insertion part 20 has a construction such that both ends of a plate spring material 200 are bent in the same direction, and both bent portions 201 are provided with locking concave portions 202 that are concaved so as to match the shapes of the locking convex portions 18 and 19. Like the insertion part 17 shown in FIG. 5, this insertion part 20 is also inserted between the upper end portions of the opening/closing operation portions 11.

In order to prohibit work for opening the gripping portions of the joint connecting clip 1 by using the insertion part (one-touch lock part) 20 having the above-described construction, as shown in FIG. 9(B), the insertion part 20 is put on the upper end portions of the opening/closing operation portions 11 with the bent portions 201 being directed downward, and in this state, the top surface of the insertion part 20 is pressed by a finger from the upside. By doing this, as shown in FIGS. 9(C-1) and 9(C-2), the locking concave portions 202 are fitted on the locking convex portions 18 and 19 by deflecting deformation of the bent portions 201. After the one-touch setting operation of merely pressing the insertion part 20 has been completed in this manner, the whole of the insertion part 20 becomes an obstacle to the operation for pinching the opening/closing operation portion 11 of the joint connecting clip 1, so that the operation cannot be performed. Therefore, the operation for opening the gripping portions 10 of the joint connecting clip 1 is prohibited.

The work procedure for fixing the male joint 50 and the female joint 60 to each other by using the joint connecting clip 1 shown in FIG. 7 is the same as that for the joint connecting clip 1 shown in FIG. 4 (refer to FIGS. 6(A), 6(B) and 6(C)) as shown in FIGS. 9(A) and 9(B), so that the detailed explanation thereof is omitted.

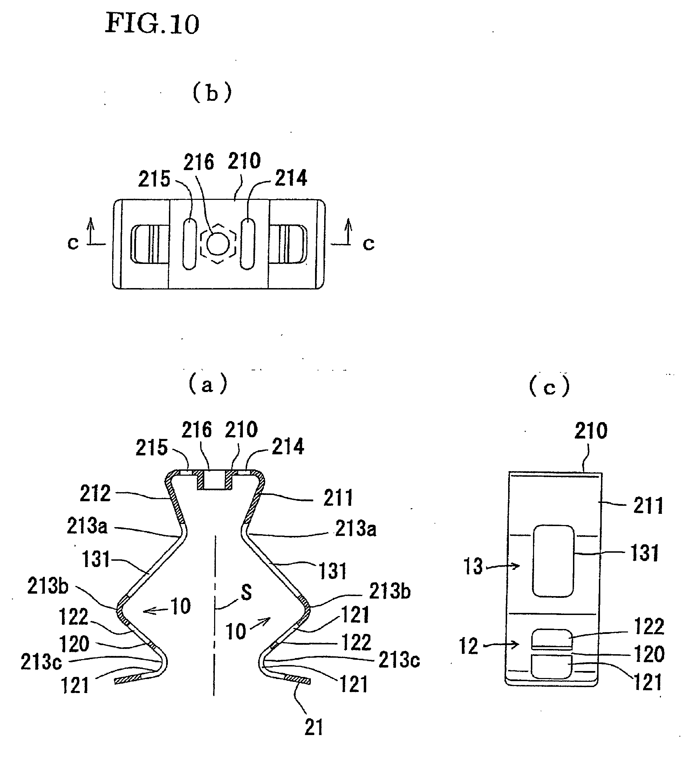

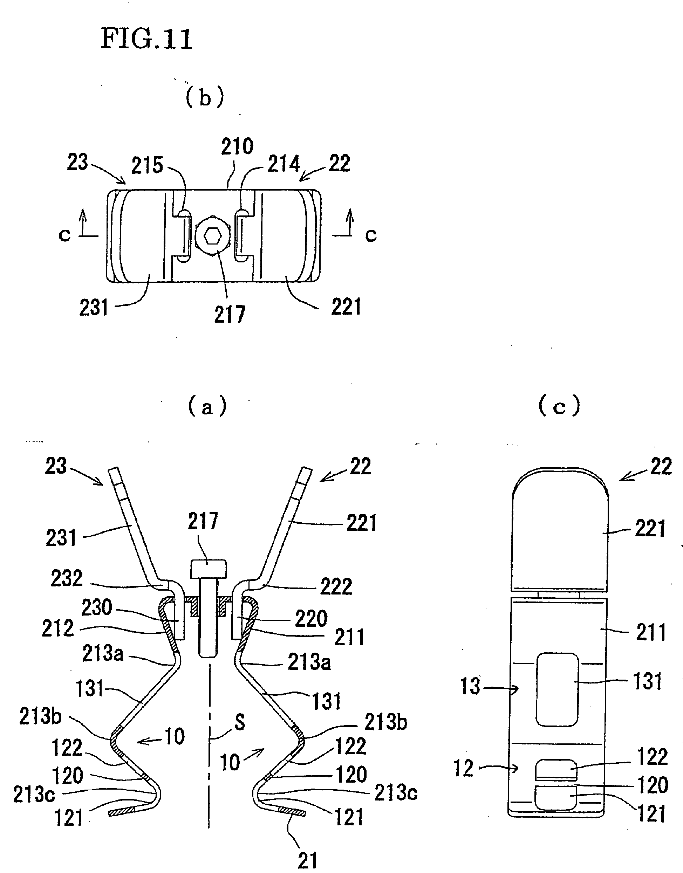

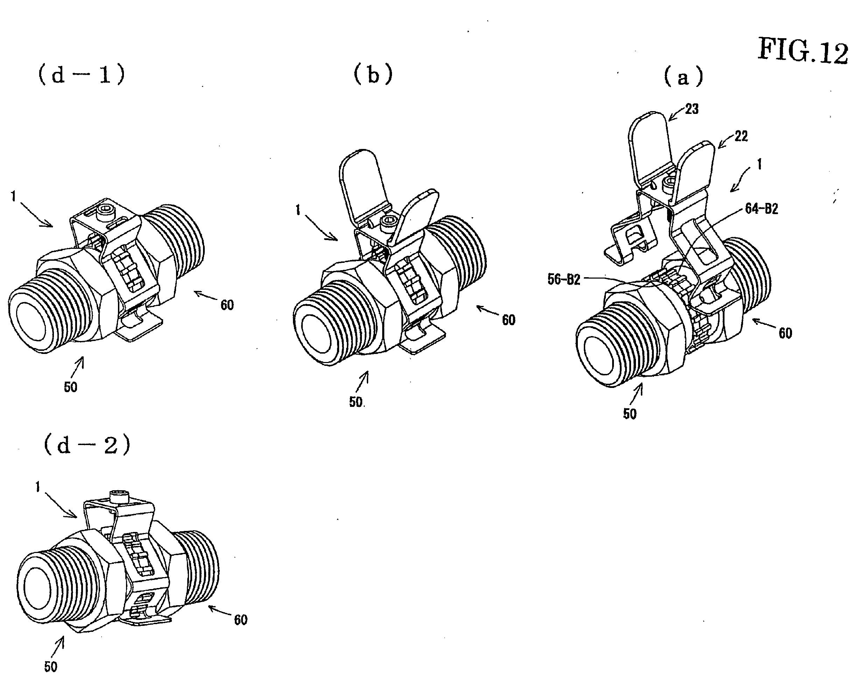

FIG. 10 is an explanatory view of a joint connecting clip in accordance with still another embodiment of the present invention, FIG. 11 is an explanatory view of opening operation prohibiting means which prohibits work for opening gripping portions of the joint connecting clip shown in FIG. 10, and FIG. 12 is an explanatory view showing a state in which the joint connecting clip shown in FIG. 10 is used and a state in which the opening operation prohibiting means shown in FIG. 11 is used.

For the male joint 50 and the female joint 60 connected as shown in FIG. 3, the joint connecting clip shown in FIG. 10 is used as a means for preventing the male joint 50 and the female joint 60 from coming off each other by fixing the flange portions 52 and 62 to each other in a butted state (refer to FIG. 12).

The joint connecting clip 1 shown in FIG. 10 consists of one plate spring material 21 that is bendedly formed. In this embodiment, as a specific construction of the joint connecting clip 1, one plate spring material 21 is bent in the same direction at two places near the central portion, by which a top plate portion 210 and right and left inclined plate portions 211 and 212, which are inclined so as to become narrower on the lower side, are formed. Also, the inclined plate portions 211 and 212 are further bent at three places. Of bent portions 213A, 213B and 213C at three places, the first bent portion 213A close to the upper part of the clip 1 is valley bent as viewed from the centerline S of the joint connecting clip 1. The second bent portion 213B, which is located below the first bent portion 213A, is peak bent as viewed from the centerline S of the joint connecting clip 1. Further, the third bent portion 213C, which is located below the second bent portion 213B, is valley bent as viewed from the centerline S of the joint connecting clip 1. A tip end portion from the third bent portion 213C is parallel with the top plate portion 210 in the upper part of the clip 1 . Further, the top plate portion 210 is provided with a threaded hole 216 so that a lock screw 217 can be installed in the downward direction in this threaded hole 216.

Of the one plate spring material 21 bent as described above, a range running from the first bent portion 213A to the third bent portion 213C through the second bent portion 213B forms the gripping portion 10 of the joint connecting clip 1 shown in FIG. 10. The gripping portions 10 can be opened and closed transversely with both sides of the top plate portion 210 being supporting points by elastic deformation of the plate spring material 21, and are closed so as to hold the outer peripheries of the flange portions 52 and 62 of the male joint 50 and the female joint 60 therebetween from both sides.

The gripping portion 10 of the joint connecting clip 1 shown in FIG. 10 is also provided with the engagement portions 12 and 13. The specific construction of the engagement portions 12 and 13 are the same as that shown in FIG. 4, so that the same reference numerals are applied to elements that are the same as those shown in FIG. 4, and the detailed explanation thereof is omitted.

In the joint connecting clip 1 shown in FIG. 10, the upper part of the gripping portion 10, specifically, the top plate portion 210 is provided with a pair of mounting holes 214 and 215. One mounting hole 214 is provided so as to be close to one inclined plate portion 211, and the other mounting hole 215 is provided so as to be close to the other inclined plate portion 212.

Also, the joint connecting clip 1 shown in FIG. 10 is provided with a pair of opening/closing operation elements 22 and 23 (refer to FIG. 11). One opening/closing operation element 22 includes a pressing plate portion 220, which is detachably inserted in the mounting hole 214 in the joint connecting clip 1, and a pinching plate portion 221, which is bent into an S shape from the upper end of the pressing plate portion 220 and is inclined slantwise upward. The other opening/closing operation element 23 also includes a pressing plate portion 230 and a pinching plate portion 231 in the same way.

The paired opening/closing operation elements 22 and 23 having the above-described construction are used when the gripping portions 10 of the joint connecting clip 1 are opened. In order to open the gripping portions 10, the pressing plate portions 220 and 230 of the opening/closing operation elements 22 and 23 are inserted into the corresponding mounting holes 214 and 215 substantially at right angles from above the top plate portion 210. By doing this, the tip ends of the pressing plate portions 220 and 230 of the opening/closing operation elements 22 and 23 are brought into contact with the corresponding inclined plate portions 211 and 212. Also, the pinching plate portions 221 and 231 of the opening/closing operation elements 22 and 23 are arranged in a state of being open in a V shape toward the outside. In this state, when the pinching plate portions 221 and 231 of the opening/closing operation elements 22 and 23 are pinched from upper both sides of the gripping portions 10 so as to be brought close to each other, the pressing plate portions 220 and 230 of the opening/closing operation elements 22 and23press the inclined plate portions 211 and 212 to the outside using the principle of the lever with the S-shaped portions 222 and 232 of the opening/closing operation elements 22 and 23 being the fulcrums, by which the gripping portions 10 are opened.

A usage example of the joint connecting clip 1 constructed as described above, which is shown in FIG. 10, will be explained with reference to FIG. 12.

A work procedure for fixing the male joint 50 and the female joint 60 to each other by using the joint connecting clip 1 shown in FIG. 10 is as described below. As shown in FIG. 12(A), the paired opening/closing operation elements 22 and 23 are insertedly set in the mounting holes 214 and 215 in the joint connecting clip 1. Then, the opening/closing operation elements 22 and 23 are pinched with one hand from upper both sides of the gripping portions 10 so as to be brought close to each other. Thereby, the gripping portions 10 are opened as shown in FIG. 12(A) with access of only one direction from the upside of the gripping portions 10. In this state, as shown in FIG. 12(B), the open gripping portions 10 are set so as to cover the outer peripheral portions of the flange portions 52 and 62 of the male and female joints 50 and 60, and the hand that pinches the opening/closing operation elements 22 and 23 is let go.

By doing this, the gripping portions 10 are closed by the spring force of the plate spring material 21, and the outer peripheral portions of the flange portions 52 and 62 engage with the engagement portions 12 and 13 of the gripping portions 10. This engaging mode is the same as that for the joint connecting clip 1 shown in FIG. 4. When the lock screw 217 of the top plate portion 210 is tightened in this engaged state, the tip end of the lock screw 217 presses the bottoms of the concave portions 56-B2 and 64-B2 of the flange portions 52 and 62, and the whole of the joint connecting clip 1 is pulled upward by the reaction. Thereby, the bar 120 of the first engagement portion 12 is strongly brought into contact with the convex portions 56-A2 and 64-A2 of the flange portions 52 and 62 located above the bar 120, so that the connection fixing force of the male and female joints 50 and 60 due to the joint connecting clip 1 increases. Therefore, the joint connecting clip 1 is fixedly locked to the male and female joint 50 and 60 side, and the male and female joints 50 and 60 are firmly fixed via the joint connecting clip 1.

By the above-described procedure, the fixing of the male joint 50 and the female joint 60 using the joint connecting clip 1 shown in FIG. 10 is completed. After the fixing has been completed, the paired opening/closing operation elements 22 and 23 are removed, and are stored at a predetermined place.

In order to remove the joint connecting clip 1 shown in FIG. 10 that fixes the male joint 50 and the female joint 60 to each other as described above, as in the case of the installation, the paired opening/closing operation elements 22 and 23 are insertedly set in the mounting holes 214 and 215 in the joint connecting clip 1. Then, the paired opening/closing operation elements 22 and 23 have only to be pinched with one hand from upper both sides of the gripping portions 10 so as to be brought close to each other. By doing this, the gripping portions 10 are opened, and thereby the engagement portions 12 and 13 are removed from the flange portions 52 and 62, so that the joint connecting clip 1 shown in FIG. 10 can be removed easily.

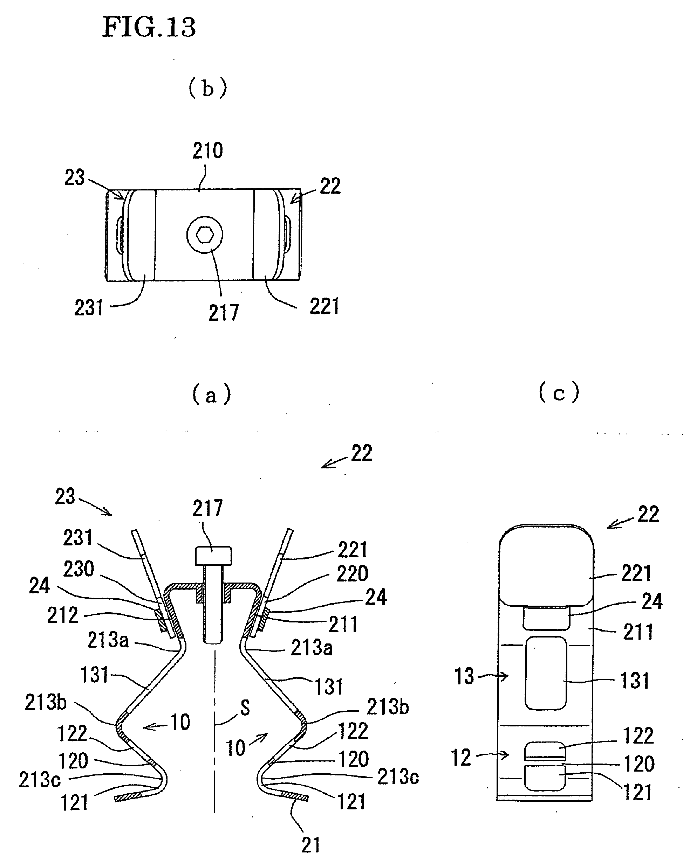

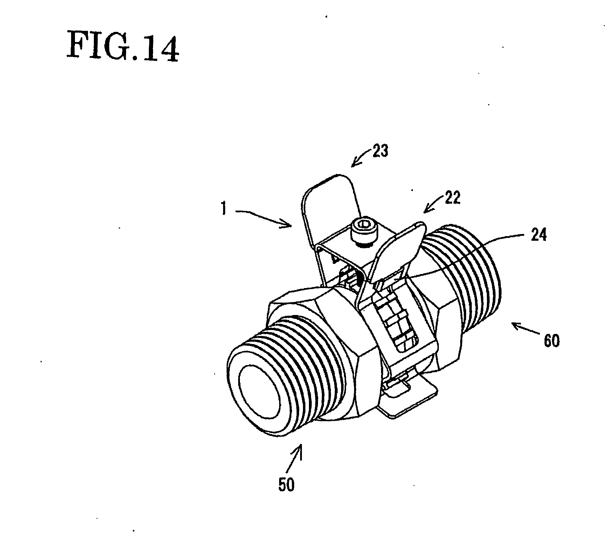

The joint connecting clip 1 shown in FIG. 10 employs a construction in which paired mounting holes 214 and 215 are provided in the top plate portion 210, and the paired opening/closing operation elements 22 and 23 are insertedly mounted in the mounting holes 214 and 215. However, in place of this construction, as in the case of the joint connecting clip 1 shown in FIG. 13, a construction can be employed in which pockets 24 that are open upward and downward are integrally provided on the inclined plate portions 211 and 212 (refer to FIG. 14), and the opening/closing operation elements 22 and 23 are insertedly mounted in the pockets 24. In this case, the inside portions of the pockets 24 function as mounting holes for the opening/closing operation elements 22 and 23. Also, the opening/closing operation elements 22 and 23 insertedly mounted in the pockets 24 have a flat plate construction that is not bent as shown in FIG. 13. By employing such a construction, the cost of the whole of the clip 1 can be reduced due to the saving of the bending fabrication cost.

## Claims

1. A joint connecting structure comprising a joint connecting clip (1), wherein when a first joint (50) having a flange portion (52) on the outer peripheral surface providing a plurality of irregularities (56) and a second joint (60) having a flange portion (62) on the outer peripheral surface providing a plurality of irregularities (64) are connected to each other so that the flange portions (52, 62) are butted against each other, the joint connecting clip (1) fixes the flange portions (52, 62) in a state in which the flange portions (52, 62) are butted against each other, and
the joint connecting clip (1) comprises:
gripping portions (10) which are closed so as to hold the flange portions (52, 62) therebetween from outer periphery both sides; and
an engagement portion (12) with which the outer peripheral portions of the flange portions (52, 62) engage when the gripping portions (10) are closed;
**characterized in that** the joint connecting clip (1) further comprises
a pair of opening/closing operation portions (11, 11) which are integrally provided above the gripping portions (10), and open the gripping portions (10) with access of only one direction from the upside of the gripping portions (10) by a pinching operation; urging means (5) for always urging the gripping portions (10) in the closing direction;
wherein the engagement portion (12) has two opening holes (121, 122) divided vertically by a bar (120), and has a construction such that at least any one of convex portions (56-A1, 64-A1) of the irregularities (56, 64) engages with one opening hole (121) ; an upper convex portion (56-A2, 64-A2) adjacent to the engaging convex portion (56-A1, 64-A1) engages with the other opening hole (122) ; and the bar (120) engages with the concave portion (56-B1, 64-B1) between the upper and lower convex portions (56-A1, 64-A1, 56-A2, 64-A2) engaging with the opening holes (121, 122), by which the turning of the first and second joints (50, 60) is prevented.

2. The joint connecting structure according to claim 1, wherein the joint connecting structure further comprises the first joint (50) having a flange portion (52) on the outer peripheral surface providing a plurality of irregularities (56) and the second joint (60) having a flange portion (62) on the outer peripheral surface providing a plurality of irregularities (64).

3. A joint connecting structure comprising a joint connecting clip (1), wherein when a first joint (50) having a flange portion (52) on the outer peripheral surface and a second joint (60) having a flange portion (62) on the outer peripheral surface are connected to each other so that the flange portions (52, 62) are butted against each other, the joint connecting clip (1) fixes the flange portions (52, 62) in a state in which the flange portions (52, 62) are butted against each other, and wherein
the joint connecting clip (1) is formed by bending a plate spring material (21), and comprises:
gripping portions (10) which are closed so as to hold the flange portions (52, 62) therebetween from outer periphery both sides by elastic deformation of the plate spring material (21) ; and
an engagement portion (12) with which the outer peripheral portions of the flange portions (52, 62) engage when the gripping portions (10) are closed;
**characterized in that** the joint connecting clip (1) further comprises a pair of mounting holes (214, 215) provided above the gripping portions (10); wherein a pair of opening/closing operation elements (22,23) are insertedly mounted in the paired mounting holes (214, 215) detachably, and open the gripping portions (10) with access of only one direction from the upside of the gripping portions (10) by a pinching operation.

4. The joint connecting structure according to claim 3, wherein the joint connecting structure further comprises the first joint (50) having a flange portion (52) on the outer peripheral surface and the second joint (60) having a flange portion (62) on the outer peripheral surface, wherein a plurality of irregularities (56) are formed on the outer peripheral surfaces of the flange portions (52, 62).

5. The joint connecting structure according to any of the claims 1 or 2, wherein the joint connecting clip (1) further comprises opening operation prohibiting means (14) for prohibiting work for opening the gripping portions (10).

6. The joint connecting structure according to claim 5, wherein
the opening operation prohibiting means (14) has a set of engagement holes (15, 16) which are provided in the upper end portions of the opening/closing operation portions (11, 11) so as to face to each other; and
an insertion part (17) inserted between the upper end portions of the opening/closing operation portions (11,11), and
the insertion part (17) comprises a plate portion (170) ; a fixed protrusion (171) formed so as to project from one end portion of the plate portion (170); a sliding protrusion (172) provided so as to appear and disappear from the other endportion of the plate portion (170); and urging means (177) for urging the sliding protrusion (172) in a direction such that the sliding protrusion (172) is projected to the outside from the other endportion of the plate portion (170), and is constructed so that when work for opening the gripping portions (10) is prohibited, the sliding protrusion (172) and the fixed protrusion (171) are inserted into the set of engagement holes (15, 16), whereby the appearance and disappearance of the sliding protrusion (172) are prohibited in this state.

7. The joint connecting structure according to claim 5, wherein
the opening operation prohibiting means (14) has a set of locking convex portions (18, 19) which are provided in the upper end portions of the opening/closing operation portions (11, 11) and face to each other; and
an insertion part (20) inserted between the upper end portions of the opening/closing operation portions (11, 11), and
the insertion part (20) has a construction such that both ends of a plate spring material (200) are bent in the same direction, and both bent portions (201, 201) are provided with locking concave portions (202, 202) which are concaved so as to match the shapes of the locking convex portions (18, 19), and when work for opening the gripping portions (10) is prohibited, the locking concave portions (202, 202) are fitted on the locking convex portions (18, 19) by deflecting deformation of the bent portions (201, 201).

8. The joint connecting structure according to claim 4, wherein
a plurality of irregularities (56, 64) are formed on the outer peripheral surfaces of the flange portions (52, 62), and the engagement portion (12) has two opening holes (121, 122) divided vertically by a bar (120), and has a construction such that of the irregularities (56, 64), at least any one of convex portions (56-A1, 64-A1) engages with one opening hole (121); an upper convex portion (56-A2, 64-A2) adjacent to the engaging convex portion (56-A1, 64-A1) engages with the other opening hole (122); and the bar (120) engages with the concave portion (56-B1, 64-B1) between the upper and lower convex portions (56-A1, 64-A1, 56-A2, 64-A2) engaging with the opening holes (121, 122), by which the turning of the first and second joints (50, 60) is prevented.

9. The joint connecting structure according to any of the claims 3 or 4, wherein there is provided a lock screw (217) for fixedly locking the joint connecting clip (1) to the joint side.

## Patentansprüche

1. Eine Anschlussverbindungsstruktur, umfassend eine Anschlussverbindungsklammer (1), wobei wenn ein erster Anschluss (50) mit einem Flanschteil (52) auf der äußeren peripheren Oberfläche, der eine Vielzahl von Unregelmäßigkeiten (56) bereitstellt, und ein zweiter Anschluss (60) mit einem Flanschteil (62) auf der äußeren peripheren Oberfläche, der eine Vielzahl von Unregelmäßigkeiten (64) bereitstellt, derart miteinander verbunden sind, dass die Flanschteile (52, 62) aneinander anliegen, die Anschlussverbindungsklammer (1) die Flanschteile (52, 62) in einem Zustand, in dem die Flanschteile (52, 62) aneinander anliegen, fixiert und
die Anschlussverbindungsklammer (1) folgendes umfasst:
Greifteile (10), die geschlossen sind, um die Flanschteile (52, 62) von beiden äußeren peripheren Seiten dazwischen zu halten; und
einen Eingriffsteil (12), mit dem die äußeren peripheren Teile der Flanschteile (52, 62) ineinandergreifen, wenn die Greifteile (10) geschlossen sind;
**dadurch gekennzeichnet, dass** die Anschlussverbindungsklammer (1) ferner folgendes umfasst:
ein Paar Öffnungs-/Schließungsvorgangsteile (11, 11), die einstückig über den Greifteilen (10) bereitgestellt sind und die Greifteile (10) mit Zugang von nur einer Richtung von der Oberseite der Greifteile (10) durch einen Kneifvorgang öffnen;
Richtmittel (5) zum ständigen Richten der Greifteile (10) in die Schließrichtung;
wobei der Eingriffsteil (12) zwei durch einen Stab (120) vertikal geteilte Öffnungslöcher (121, 122) aufweist und eine Konstruktion aufweist, durch die mindestens irgendeines der konvexen Teile (56-A1, 64-A1) der Unregelmäßigkeiten (56, 64) in ein Öffnungsloch (121) eingreift; ein dem eingreifenden konvexen Teil (56-A1, 64-A1) benachbarter oberer konvexer Teil (56-A2, 64-A2) in das andere Öffnungsloch (122) eingreift; und der Stab (120) in den konkaven Teil (56-B1, 64-B1) zwischen den in die Öffnungslöcher (121, 122) eingreifenden oberen und unteren konvexen Teilen (56-A1, 64-A1, 56-A2, 64-A2) eingreift, wodurch das Drehen der ersten und zweiten Anschlüsse (50, 60) verhindert wird.

2. Die Anschlussverbindungsstruktur nach Anspruch 1, wobei die Anschlussverbindungsstruktur ferner den ersten Anschluss (50) mit einem Flanschteil (52) auf der äußeren peripheren Oberfläche, der eine Vielzahl von Unregelmäßigkeiten (56) bereitstellt, sowie den zweiten Anschluss (60) mit einem Flanschteil (62) auf der äußeren peripheren Oberfläche, der eine Vielzahl von Unregelmäßigkeiten (64) bereitstellt, umfasst.

3. Eine Anschlussverbindungsstruktur, umfassend eine Anschlussverbindungsklammer (1), wobei wenn ein erster Anschluss (50) mit einem Flanschteil (52) auf der äußeren peripheren Oberfläche und ein zweiter Anschluss (60) mit einem Flanschteil (62) auf der äußeren peripheren Oberfläche derart miteinander verbunden sind, dass die Flanschteile (52, 62) aneinander anliegen, die Anschlussverbindungsklammer (1) die Flanschteile (52, 62) in einem Zustand, in dem die Flanschteile (52, 62) aneinander anliegen, fixiert und wobei
die Anschlussverbindungsklammer (1) durch Biegen eines Blechfedermaterials (21) gebildet ist und folgendes umfasst:
Greifteile (10), die geschlossen sind, um die Flanschteile (52, 62) durch elastische Verformung des Blechfedermaterials (21) von beiden äußeren peripheren Seiten dazwischen zu halten; und
ein Eingriffsteil (12), mit dem die äußeren peripheren Teile der Flanschteile (52, 62) ineinandergreifen, wenn die Greifteile (10) geschlossen sind;
**dadurch gekennzeichnet, dass** die Anschlussverbindungsklammer (1) ferner ein Paar über den Greifteilen (10) bereitgestellte Montierlöcher (214, 215) umfasst; wobei ein Paar Öffnungs-/Schließungsvorgangselemente (22, 23) in den gepaarten Montierlöchern (214, 215) eingesetzt entfernbar montiert sind und die Greifteile (10) mit Zugang von nur einer Richtung von der Oberseite der Greifteile (10) durch einen Kneifvorgang öffnen.

4. Die Anschlussverbindungsstruktur nach Anspruch 3, wobei die Anschlussverbindungsstruktur ferner den ersten Anschluss (50) mit einem Flanschteil (52) auf der äußeren peripheren Oberfläche sowie den zweiten Anschluss (60) mit einem Flanschteil (62) auf der äußeren peripheren Oberfläche umfasst, wobei auf den äußeren peripheren Oberflächen der Flanschteile (52, 62) eine Vielzahl von Unregelmäßigkeiten (56) ausgebildet sind.

5. Die Anschlussverbindungsstruktur nach irgendeinem der Ansprüche 1 oder 2, wobei die Anschlussverbindungsklammer (1) ferner Öffnungsvorgangsunterbindungsmittel (14) zum Unterbinden von Arbeit zum Öffnen der Greifteile (10) umfasst.

6. Die Anschlussverbindungsstruktur nach Anspruch 5, wobei
das Öffnungsvorgangsunterbindungsmittel (14) einen Satz Eingriffslöcher (15, 16) aufweist, die in den oberen Endteilen der Öffnungs-/Schließungsvorgangsteile (11, 11) bereitgestellt sind, so dass sie einander gegenüberliegen; und
einen Einsatzteil (17), der zwischen den oberen Endteilen der Öffnungs-/Schließungsvorgangsteile (11, 11) eingesetzt ist, und
der Einsatzteil (17) einen Blechteil (170) umfasst; einen festen Vorsprung (171), der derart ausgebildet ist, dass er von einem Endteil des Blechteils (170) herausragt; einen gleitenden Vorsprung (172), der derart bereitgestellt ist, dass er von dem anderen Endteil des Blechteils (170) erscheint und verschwindet; sowie Richtmittel (177) zum Richten des gleitenden Vorsprungs (172) in eine Richtung, so dass der gleitende Vorsprung (172) von dem anderen Endteil des Blechteils (170) nach außen herausragt und derart konstruiert ist, dass wenn Arbeit zum Öffnen der Greifteile (10) unterbunden ist, der gleitende Vorsprung (172) und der feste Vorsprung (171) in den Satz Eingriffslöcher (15, 16) eingesetzt sind, wobei das Erscheinen und Verschwinden des gleitenden Vorsprungs (172) in diesem Zustand unterbunden sind.

7. Die Anschlussverbindungsstruktur nach Anspruch 5, wobei
das Öffnungsvorgangsunterbindungsmittel (14) einen Satz arretierender konvexer Teile (18, 19) aufweist, die in den oberen Endteilen der Öffnungs-/Schließungsvorgangsteile (11, 11) bereitgestellt sind und einander gegenüberliegen; und
einen Einsatzteil (20), der zwischen den oberen Endteilen der Öffnungs-/Schließungsvorgangsteile (11, 11) eingesetzt ist, und
der Einsatzteil (20) eine Konstruktion aufweist, durch die beide Enden eines Blechfedermaterials (200) in dieselbe Richtung gebogen sind und beide gebogenen Teile (201, 201) mit arretierenden konkaven Teilen (202, 202) versehen sind, die konkav geformt sind, um zu den Formen der arretierenden konvexen Teile (18, 19) zu passen, und, wenn Arbeit zum Öffnen der Greifteile (10) unterbunden ist, die arretierenden konkaven Teile (202, 202) durch auslenkende Verformung der gebogenen Teile (201, 201) an die arretierenden konvexen Teile (18, 19) angepasst sind.

8. Die Anschlussverbindungsstruktur nach Anspruch 4, wobei
auf den äußeren peripheren Oberflächen der Flanschteile (52, 62) eine Vielzahl von Unregelmäßigkeiten (56, 64) ausgebildet sind und der Eingriffsteil (12) zwei durch einen Stab (120) vertikal geteilte Öffnungslöcher (121, 122) aufweist und eine Konstruktion aufweist, durch die von den Unregelmäßigkeiten (56, 64) mindestens irgendeiner der konvexen Teile (56-A1, 64-A1) in ein Öffnungsloch (121) eingreift; ein dem eingreifenden konvexen Teil (56-A1, 64-A1) benachbarter oberer konvexer Teil (56-A2, 64-A2) in das andere Öffnungsloch (122) eingreift; und der Stab (120) in den konkaven Teil (56-B1, 64-B1) zwischen den in die Öffnungslöcher (121, 122) eingreifenden oberen und unteren konvexen Teilen (56-A1, 64-A1, 56-A2, 64-A2) eingreift, wodurch das Drehen der ersten und zweiten Anschlüsse (50, 60) verhindert wird.

9. Die Anschlussverbindungsstruktur nach irgendeinem der Ansprüche 3 oder 4, wobei eine Arretierschraube (217) zum festen Arretieren der Anschlussverbindungsklammer (1) an die Anschlussseite bereitgestellt ist.

## Revendications

1. Structure de raccordement comprenant un clip de raccordement (1), dans laquelle, si un premier joint (50) ayant une partie (52) de bride sur la surface périphérique externe dotée d'une pluralité d'irrégularités (56), et un second joint (60) ayant une partie (62) de bride sur la surface périphérique externe dotée d'une pluralité d'irrégularités (64) sont raccordés entre eux de sorte que les parties (52, 62) de bride soient disposées bout à bout, le clip (1) de raccordement fixe les parties (52, 62) de bride dans un état dans lequel les parties (52, 62) de bride sont disposées bout à bout, et
le clip (1) de raccordement comprenant :
des parties (10) de préhension qui sont fermées de manière à tenir les parties (52, 62) de bride entre elles depuis les deux côtés périphériques externes ; et
une partie (12) d'engagement avec laquelle les parties périphériques externes des parties (52, 62) de bride viennent en prise si les parties (10) de préhension sont fermées,
**caractérisée en ce que** le clip (1) de raccordement comprend en outre
une paire de parties (11, 11) d'opération d'ouverture/de fermeture qui sont prévues intégralement au-dessus des parties (10) de préhension, et qui ouvrent les parties (10) de préhension au moyen d'une opération de pinçage, l'accès n'étant possible que d'une seule direction depuis la partie supérieure des parties (10) de préhension ;
un moyen (5) de poussée destiné à pousser toujours les parties (10) de préhension dans la direction de fermeture ;
la partie (12) d'engagement ayant deux trous (121, 122) d'ouverture divisés verticalement par une barre (120), et étant construite de telle façon que l'une au moins des parties (56-A1, 64A1) convexes des irrégularités (56, 64) vienne en prise avec un trou (121) d'ouverture ; qu'une partie (56-A2, 64-A2) convexe supérieure qui est adjacente à la partie (56-A1, 64-A1) convexe d'engagement vienne en prise avec l'autre trou (122) d'ouverture ; et que la barre (120) vienne en prise avec la partie (56-B1, 64-B1) concave entre les parties (56-A1, 64-A1, 56-A2, 64-A2) convexes supérieure et inférieure en prise avec les trous (121, 122) d'ouverture, empêchant la rotation du premier et second joints (50, 60).

2. La structure de raccordement selon la revendication 1, dans laquelle la structure de raccordement comprend en outre le premier joint (50) ayant une partie (52) de bride sur la surface périphérique externe dotée d'une pluralité d'irrégularités (56), et le second joint (60) ayant une partie (62) de bride sur la surface périphérique externe dotée d'une pluralité d'irrégularités (64).

3. Structure de raccordement comprenant un clip (1) de raccordement, dans laquelle, si un premier joint (50) ayant une partie (52) de bride sur la surface périphérique externe, et un second joint (60) ayant une partie (62) de bride sur la surface périphérique externe sont raccordés entre eux de sorte que les parties (52, 62) de bride soient disposées bout à bout, le clip (1) de raccordement fixe les parties (52, 62) de bride dans un état dans lequel les parties (52, 62) de bride sont disposées bout à bout, et dans laquelle
le clip (1) de raccordement est formé en pliant un matériau (21) de ressort à lames, et comprend :
des parties (10) de préhension qui sont fermées de manière à tenir les parties (52, 62) de bride entre elles depuis les deux côtés périphériques externes par une déformation élastique du matériau (21) de ressort à lames ; et
une partie (12) d'engagement avec laquelle les parties périphériques externes des parties (52, 62) de bride viennent en prise si les parties (10) de préhension sont fermées ;
**caractérisée en ce que** le clip (1) de raccordement comprend en outre une paire de trous (214, 215) de montage prévus au-dessus des parties (10) de préhension ; une paire d'éléments (22, 23) d'opération d'ouverture/de fermeture étant montée de manière amovible dans les trous (214, 215) de montage appariés, par insertion, et ouvrant les parties (10) de préhension au moyen d'une opération de pinçage, l'accès n'étant possible que d'une seule direction depuis la partie supérieure des parties (10) de préhension.

4. Structure de raccordement selon la revendication 3, dans laquelle la structure de raccordement comprend en outre le premier joint (50) ayant une partie (52) de bride sur la surface périphérique externe, et le second joint (60) ayant une partie (62) de bride sur la surface périphérique externe, une pluralité d'irrégularités (56) étant formée sur les surfaces périphériques externes des parties (52, 62) de bride.

5. Structure de raccordement selon l'une des revendications 1 ou 2, dans laquelle le clip (1) de raccordement comprend en outre un moyen (14) d'interdiction de l'opération d'ouverture destiné à empêcher le travail nécessaire pour ouvrir les parties (10) de préhension.

6. Structure de raccordement selon la revendication 5, dans laquelle
le moyen (14) d'interdiction de l'opération d'ouverture comprend un ensemble de trous (15, 16) d'engagement prévus dans les parties d'extrémité supérieure des parties (11, 11) d'opération d'ouverture/de fermeture de manière à se faire face ; et
une partie (17) d'insertion insérée entre les parties d'extrémité supérieure des parties (11, 11) d'opération d'ouverture/de fermeture,
et
la partie (17) d'insertion comprenant une partie (170) de plaque ; une saillie (171) fixe formée de manière à faire saillie d'une partie d'extrémité de la partie (170) de plaque ; une saillie (172) glissante prévue de manière à apparaître et disparaître de l'autre partie d'extrémité de la partie (170) de plaque ; et un moyen (177) de poussée destiné à pousser la saillie (172) glissante dans une direction telle que la saillie (172) glissante fasse saillie vers l'extérieur depuis l'autre partie d'extrémité de la partie (170) de plaque, la partie (17) d'insertion étant construite de telle façon que la saillie (172) glissante et la saillie (171) fixe soient insérées dans l'ensemble des trous (15, 16) d'engagement si le travail nécessaire pour ouvrir les parties (10) de préhension est empêché, l'apparition et la disparition de la saillie (172) glissante étant empêchées dans cet état.

7. Structure de raccordement selon la revendication 5, dans laquelle
le moyen (14) d'interdiction de l'opération d'ouverture comprend un ensemble de parties (18, 19) convexes de blocage qui sont prévues dans les parties d'extrémité supérieure des parties (11, 11) d'opération d'ouverture/de fermeture et qui se font face ; et
une partie (20) d'insertion insérée entre les parties d'extrémité supérieure des parties (11, 11) d'opération d'ouverture/de fermeture,
et
la partie (20) d'insertion étant construite de telle façon que les deux extrémités d'un matériau (200) de ressort à lames soient pliées dans la même direction, et les deux parties (201, 201) pliées étant prévues avec des parties (202, 202) concaves de blocage, qui sont rendues concaves de manière à épouser les formes des parties (18, 19) convexes de blocage, et les parties (202, 202) concaves de blocage étant montées sur les parties (18, 19) convexes de blocage par une déformation défléchissante des parties (201, 201) pliées si le travail nécessaire pour ouvrir les parties (10) de préhension est empêché.

8. La structure de raccordement selon la revendication 4, dans laquelle
une pluralité d'irrégularités (56, 64) est formée sur les surfaces périphériques externes des parties (52, 62) de bride, la partie (12) d'engagement ayant deux trous (121, 122) d'ouverture divisés verticalement par une barre, (120) et étant construite de telle façon que l'une au moins des parties (56-A1, 64-A1) convexes des irrégularités (56, 64) vienne en prise avec un trou (121) d'ouverture ; qu'une partie (56-A2, 64-A2) convexe supérieure qui est adjacente aux parties (56-A1, 64-A1) convexes d'engagement vienne en prise avec l'autre trou (122) d'ouverture ; et que la barre (120) vienne en prise avec la partie (56-B1, 64-B1) concave entre les parties (56-Al, 64-A1, 56-A2, 64-A2) convexes supérieure et inférieure en prise avec les trous (121, 122) d'ouverture, empêchant la rotation du premier et second joints (50, 60).

9. Structure de raccordement selon l'une des revendications 3 ou 4, dans laquelle est prévue une vis (217) de verrouillage destinée à verrouiller de manière fixe le clip (1) de raccordement sur le côté du joint.
